# FASCICULE DE BREVET EUROPEEN

(11) **EP 0 866 393 B1**
(45) Date de publication et mention de la délivrance du brevet: **21.11.2001**
(21) Numéro de dépôt: 98400375.6
(22) Date de dépôt: 17.02.1998
(51) Int. Cl.: G05D 1/06

(54) **Procédé et dispositif pour déterminer un trajet de vol optimal d'un aéronef**
Methode und Vorrichtung zur Bestimmung der optimalen Flugbahn eines Flugzeuges
Method and device for determining the optimal flight trajectory of an airplane

(30) Priorité: 18.03.1997 FR 9703246
(43) Date de publication de la demande: 23.09.1998
(73) Titulaire: AEROSPATIALE MATRA, 75016 Paris (FR)
(72) Inventeur: Hagelauer, Patrick, Phoenix, Arizona 85022 (US)
(74) Mandataire: Bonnetat, Christian

(56) Documents cités:
- FR-A- 2 230 260
- US-A- 4 706 198
- US-A- 4 812 990
- US-A- 5 574 647

## Description

La présente invention concerne un procédé et un dispositif pour déterminer un trajet de vol optimal d'un aéronef.

Bien que non exclusivement, la présente invention s'applique plus particulièrement à un aéronef, en particulier un avion de transport civil, muni d'un calculateur de gestion du vol.

On sait que, généralement, l'un des objectifs principaux d'un tel calculateur de gestion de vol est d'optimiser le coût du vol.

On notera que dans le cadre de la présente invention, ledit coût est défini à partir d'un critère de vol précisé ci-dessous et prenant en compte par exemple le carburant consommé et/ou la durée du vol. Cette optimisation du vol peut bien entendu concerner toutes les phases du vol, par exemple le décollage, la montée, le vol en croisière, la descente, l'atterrissage, .... Toutefois, comme parmi toutes les phases de vol possibles, la phase de vol en croisière (ou phase de croisière) est généralement la plus longue, les économies les plus importantes susceptibles d'être réalisées concernent cette dernière phase. C'est pourquoi la présente invention s'intéresse exclusivement à ladite phase de croisière.

De façon connue, comme le vol en croisière est généralement restreint au vol sur des niveaux de vol à altitudes déterminées par les autorités gérant le trafic aérien, l'optimisation mise en oeuvre par le calculateur de gestion de vol consiste généralement à déterminer les positions optimales des points de changement de niveau de vol, tel que décrit par exemple dans un article de Sam Liden intitulé "The Evolution of Flight Management Systems" et publié à l'occasion de la conférence "Digital Avionics Systems Conference" de 1994.

Différentes solutions sont connues pour réaliser une telle optimisation.

Toutefois, toutes les solutions usuelles connues ne réalisent pas l'optimisation selon une vision globale, mais comme la résolution successive de problèmes d'optimisation partiels, restreints à chaque fois à la recherche d'une seule position de changement entre deux niveaux de vol déterminés, par exemple le niveau de vol courant et le niveau de vol supérieur.

Aussi, lorsque plusieurs changements de niveau sont envisagés, la recherche d'une position de changement n'est mise en oeuvre que lorsque la position de changement précédente est déterminée.

Par conséquent, les positions de changement de niveau obtenues par ces solutions connues ne correspondent souvent pas à celles permettant de minimiser le coût de vol global sur toute la phase de croisière, puisqu'un changement de niveau qui est judicieux sur une zone de vol limitée, telle que traitée par lesdites solutions connues, peut s'avérer comme préjudiciable sur une zone de vol plus importante, par exemple en obligeant la réalisation d'autres changements de niveau, qui n'aurait pas été nécessaire si le premier changement de niveau n'avait pas été réalisé.

A titre d'exemple, un article de Sam Liden, intitulé "Optimum Cruise Profiles in the Presence of Winds" et paru à l'occasion de la conférence "11th Digital Avionics Systems Conference" d'octobre 1992 à Seattle, décrit une telle solution. Dans ce cas, la recherche de tous les points de changement de niveau est réalisée en un seul traitement.

Toutefois, on ne prend en compte à chaque fois que deux niveaux de vol successifs définis. Aussi, bien que déterminés par un seul traitement, les différents points de changement de niveau sont dans cet exemple également optimisés de façon successive et indépendante.

Par le document US-4 812 990, on connaît un procédé pour déterminer un trajet de vol optimal d'un aéronef. Ce document connu propose de réaliser un maillage de l'espace dans un plan horizontal et de déterminer le trajet de vol (entre un point initial et un point final) présentant le coût le plus faible. Pour ce faire, ce document connu prévoit de commencer les traitements à partir du point final et, successivement, de retenir à chaque étape du maillage la portion de trajet depuis le point final qui présente le plus bas coût, cette méthode étant répétée jusqu'au point initial.

Ce procédé connu est un procédé d'évitement pour pénétrer dans un territoire ennemi et en revenir et tient compte, de ce fait, de facteurs spécifiques liés à l'environnement extérieur.

Par ailleurs, le document US-5 574 647 décrit une méthode et un appareil pour estimer les altitudes les plus économiques pour un aéronef qui doit suivre un plan de vol particulier. Ce document antérieur prévoit de déterminer les altitudes maximales et minimales permises, d'en déduire des altitudes légales, de calculer un coût spécifique pour chacune de ces altitudes légales, et d'en déduire les altitudes présentant le coût le plus faible.

La présente invention a pour objet de remédier aux inconvénients précités. Elle concerne un procédé pour déterminer un trajet de vol globalement optimal d'un aéronef entre une première position et une seconde position, ledit trajet de vol étant constitué de portions de trajet rectilignes adjacentes.

A cet effet, selon l'invention, ledit procédé est remarquable en ce que :
I/ on forme un maillage de l'espace entre lesdites première et seconde positions, ledit maillage :
   - correspondant à la division, selon un plan vertical, de l'espace entre lesdites première et seconde positions, en N étapes successives, à savoir des étapes 1, 2, ..., k, ..., N, N étant un nombre entier déterminé et k étant un nombre entier quelconque compris entre 1 et N, la première position représentant une étape O et la seconde position étant située à l'étape N, chacune desdites N étapes k étant définie par une ligne verticale dudit plan vertical ;
   - définissant pour chacune desdites N étapes, différentes positions situées à différentes altitudes le long de la ligne verticale correspondante ; et
   - associant à chacune desdites N étapes k, des portions de trajet autorisées pour le vol par l'aéronef, entre les positions définies pour l'étape k-1 et les positions définies pour ladite étape k ; et
II/ on répète pour chacune des étapes 1 à N la suite de phases d'opérations suivante, relative à une étape k :
   a) on sélectionne, parmi toutes les portions de trajet associées à l'étape k et définies dans ledit maillage, les portions de trajet susceptibles d'être suivies par ledit aéronef, en fonction de caractéristiques spécifiques de ce dernier ;
   b) on évalue le coût de chacune desdites portions de trajet sélectionnées, ledit coût correspondant à la valeur d'un critère de coût, engendrée par ledit aéronef lorsqu'il parcourt la portion de trajet correspondante ;
   c) d'une part, à partir des trajets retenus dans la suite de phases d'opérations, relative à l'étape k-1, pour rejoindre à partir de la première position respectivement les différentes positions de l'étape k-1 et, d'autre part, à partir des portions de trajet, sélectionnées dans la présente phase d'opérations a), on détermine les différents trajets possibles pour rejoindre à partir de la première position les différentes positions de l'étape k ;
   d) on calcule le coût de chacun desdits trajets possibles déterminés dans la phase d'opérations c), à partir du coût des trajets retenus dans la suite de phases d'opérations, relative à l'étape k-1 et du coût évalué dans la phase d'opération b) des portions de trajet correspondantes ; et
   e) pour chacune des positions de l'étape k, on compare entre eux les coûts calculés dans la phase d'opérations d), des différents trajets arrivant à ladite position et on retient le trajet présentant le coût le plus faible, le trajet retenu pour l'étape N et arrivant à ladite seconde position correspondant audit trajet de vol optimal recherché,
   et en ce que ladite première position correspond à la position initiale et la ladite seconde position correspond à la position terminale du trajet de vol.

Ainsi, grâce à l'invention, le trajet de vol est optimisé de façon globale, en prenant en compte tous les niveaux de vol possibles entre lesdites première et seconde positions.

Bien entendu, le procédé précité peut être mis en oeuvre pour déterminer les positions optimales des points de changement de niveau de vol entre lesdites première et seconde positions.

Dans ce cas, selon l'invention, lesdites positions optimales correspondent aux positions dudit trajet de vol, définies aux étapes 1 à N-1, et pour lesquelles la portion de trajet qui suit présente une pente non nulle.

Généralement, le procédé conforme à l'invention est utilisé pour déterminer un trajet de vol optimal entre une première position déterminée et une seconde position située sur la ligne verticale de l'étape N.

Dans cette hypothèse, de façon avantageuse, à la phase d'opérations e), on compare entre eux les coûts des trajets retenus pour les différentes positions de l'étape N et on retient comme trajet optimal le trajet présentant le coût le plus faible, le trajet ainsi retenu définissant la seconde position le long de la ligne verticale correspondante.

Bien entendu, dans le cadre de la présente invention, ledit procédé peut également être mis en oeuvre pour déterminer le trajet optimal entre des première et seconde positions, initialement connues.

Lorsque le coût des portions de trajet est indépendant de l'état courant de l'aéronef, le procédé peut être mis en oeuvre, comme cela est le cas usuellement pour les méthodes de "programmation dynamique" du type utilisé dans ledit procédé, en commençant à la position terminale, dans laquelle l'état de l'aéronef n'est pas connu a priori. La première position décrite dans ledit procédé correspond alors à la position terminale et la seconde position correspond à la position initiale dudit trajet.

Toutefois, dans la pratique, le coût des portions de trajet dépend de l'état courant de l'aéronef. Ainsi, selon l'invention, ladite première position représente la position initiale dans laquelle l'état de l'aéronef est connu, et ladite seconde position, la position terminale. Une telle mise en oeuvre, qui va donc à l'encontre de la pratique usuelle, permet, d'une part, de prendre en compte l'état initial connu de l'aéronef pour effectuer un calcul précis du coût des portions de trajet et, d'autre part, d'assurer une intégration aisée dans les systèmes de calcul qui existent généralement sur l'aéronef et qui fonctionnent de la position initiale vers la position terminale.

Une mise en oeuvre conforme à la pratique usuelle serait généralement possible mais fournit, dans la pratique, des résultats moins satisfaisants.

En outre, lorsque l'aéronef est pourvu d'un plan de vol préétabli, de façon avantageuse, pour chacune desdites étapes, les altitudes des positions le long de la ligne verticale correspondante sont extraites dudit plan de vol.

De plus, avantageusement, pour former ledit maillage, on tient compte de contraintes opérationnelles interdisant ou imposant certaines portions de trajet pour le vol de l'aéronef.

Par ailleurs, de préférence, les caractéristiques spécifiques de l'aéronef prises en compte à la phase d'opérations a), sont déterminées à partir de l'enveloppe de vol dudit aéronef.

En outre, à la phase d'opérations b), on évalue les coûts en mettant en oeuvre un processus de prédiction, du type connu, intégré généralement dans le calculateur de gestion du vol de l'aéronef.

De préférence :
- pour la mise en oeuvre dudit processus de prédiction, on utilise des caractéristiques spécifiques de l'aéronef, ainsi que des informations météorologiques ; et
- ledit critère de coût prend en compte la consommation de carburant estimée et la durée estimée pour parcourir la portion de trajet correspondante.

La présente invention concerne également un dispositif pour la mise en oeuvre du procédé précité.

Selon l'invention, ledit dispositif qui est de préférence intégré le cas échéant dans le calculateur de gestion de vol de l'aéronef, comporte :
- des moyens pour former un maillage de l'espace ;
- des moyens pour sélectionner des portions de trajet en fonction de caractéristiques spécifiques de l'aéronef ;
- des moyens pour évaluer le coût des portions de trajet sélectionnées ;
- des moyens pour déterminer des trajets possibles et pour calculer leurs coûts ; et
- des moyens pour comparer lesdits coûts, pour retenir les trajets présentant le coût le plus faible et pour déterminer ledit trajet optimal recherché ; ainsi que
- des moyens pour déterminer les positions optimales des points de changement de niveau de vol entre lesdites première et seconde positions.

Les figures du dessin annexé feront bien comprendre comment l'invention peut être réalisée. Sur ces figures, des références identiques désignent des éléments semblables.

La figure 1 est un schéma synoptique d'un dispositif conforme à l'invention.

La figure 2 illustre la réalisation d'un maillage conforme à l'invention dans un plan vertical comprenant des positions initiale et terminale du vol d'un aéronef dans la phase de croisière.

La figure 3 illustre un tronçon de maillage, montrant deux étapes successives quelconques dudit maillage.

La figure 4 montre les deux dernières étapes du maillage, illustrant une première mise en oeuvre du procédé conforme à l'invention.

La figure 5 montre les deux dernières étapes du maillage, illustrant une seconde mise en oeuvre du procédé conforme à l'invention.

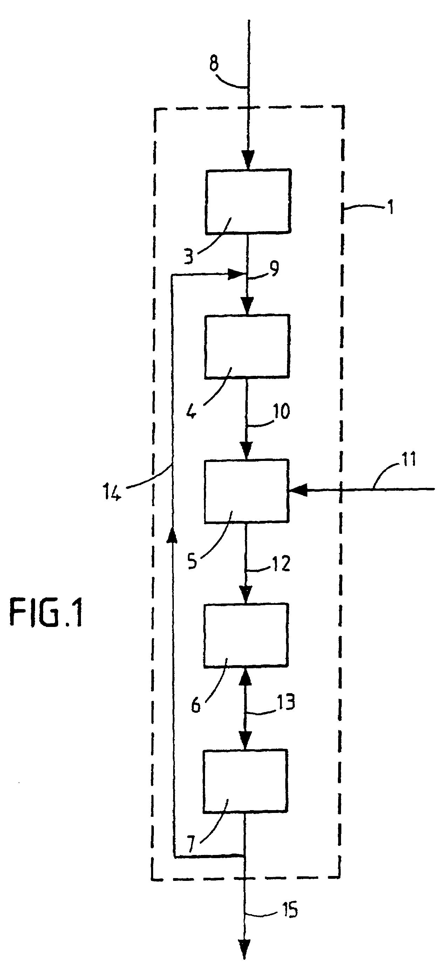

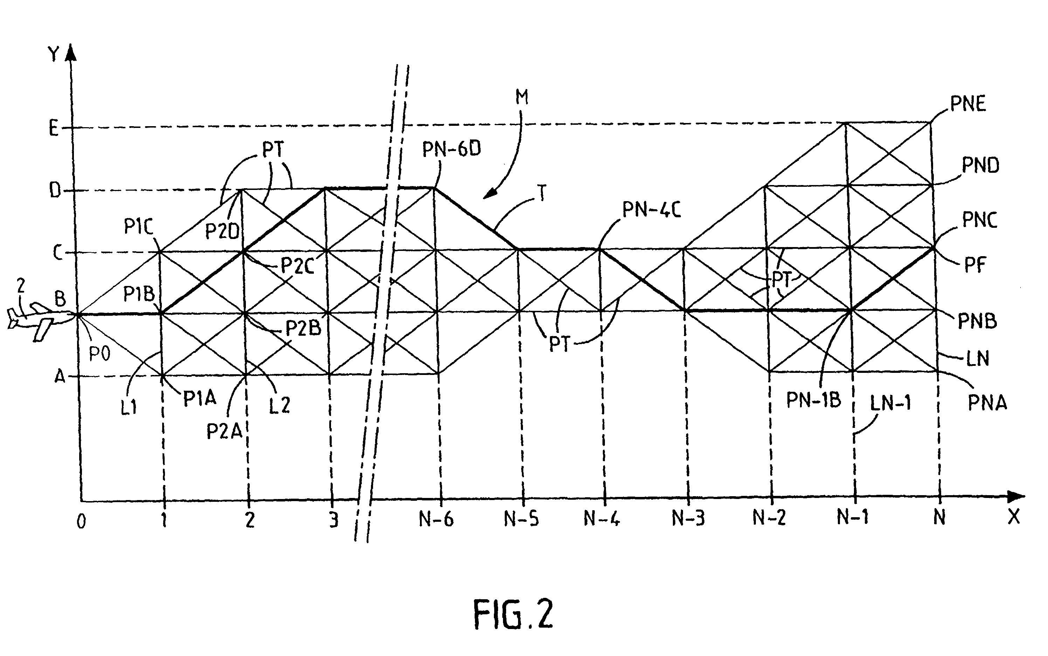

Le dispositif 1 conforme à l'invention et représenté schématiquement sur la figure 1 est destiné à déterminer un trajet de vol optimal T d'un aéronef 2 entre une première position PO et une seconde position PF de la phase de croisière dudit aéronef 2, tel que représenté sur la figure 2, ainsi que des positions optimales des points de changement de niveau de vol.

Dans le cadre de la présente invention, l'optimisation d'un trajet de vol concerne la réduction du coût de vol, comme précisé ci-dessous, et ledit trajet de vol est formé, de façon connue, de portions de trajet PT rectilignes adjacentes.

A cet effet, ledit dispositif 1 qui est par exemple intégré, le cas échéant, dans un calculateur de gestion du vol de l'aéronef 2, comporte selon l'invention :
- des moyens 3 susceptibles de réaliser un maillage M de l'espace entre lesdites positions PO et PF, comme précisé ci-dessous ; et
- des moyens 4 à 7 réalisant des traitements répétitifs utilisant ledit maillage M de manière à en déduire ledit trajet optimal T, ainsi que les positions optimales des points de changement de niveau de vol qui en résultent.

Selon l'invention, ledit maillage M représenté sur la figure 2 :
- correspond à la division, selon un plan vertical OXY (OX représentant l'horizontale et OY la verticale), de l'espace entre lesdites positions PO et PF, en N étapes successives, N étant un nombre entier supposé supérieur à 10 dans l'exemple représenté sur la figure 2, ladite position PF étant située à l'étape N, chacune desdites N étapes étant définie par une ligne verticale L1 à LN dudit plan vertical OXY ;
- définit pour chacune desdites N étapes, différentes positions, par exemple les positions P2A, P2B, P2C et P2D pour l'étape 2, situées à différentes altitudes A, B, C, D et E le long de la ligne verticale correspondante ; et
- associe à chacune desdites N étapes k, k étant un nombre entier quelconque compris entre 1 et N, des portions de trajet PT autorisées pour le vol par l'aéronef 2, entre les positions définies pour l'étape k-1 et les positions définies pour ladite étape k.

Pour former ledit maillage M, lesdits moyens 3 reçoivent des informations par l'intermédiaire d'une liaison 8, et notamment le plan de vol relatif à la phase de croisière de l'aéronef 2.

On notera qu'en particulier, les altitudes A, B, C, D et E correspondant aux altitudes de niveaux de vol horizontaux, sur lesquels l'aéronef 2 est autorisé à voler, sont extraites dudit plan de vol.

Toutefois, dans un mode de réalisation particulier, ces altitudes peuvent également être déterminées directement par les moyens 3, par exemple au moyen d'un calcul par incréments.

Pour former ledit maillage M, les moyens 3 tiennent également compte de contraintes opérationnelles qui sont notamment susceptibles d'interdire ou d'imposer certaines portions de trajet pour le vol de l'aéronef 2. Ainsi, à titre d'exemple, entre l'étape N-5 et l'étape N-3, les niveaux de vol situés aux altitudes A, D et E sont interdits et seuls les niveaux de vol situés aux altitudes B et C sont autorisés.

Le cas où une seconde position est imposée doit être considéré comme étant un cas particulier du cas indiqué précédemment.

Les traitements réalisés par les moyens 4 à 7 et précisés ci-dessous sont effectués de façon répétitive pour chacune des N étapes du maillage M.

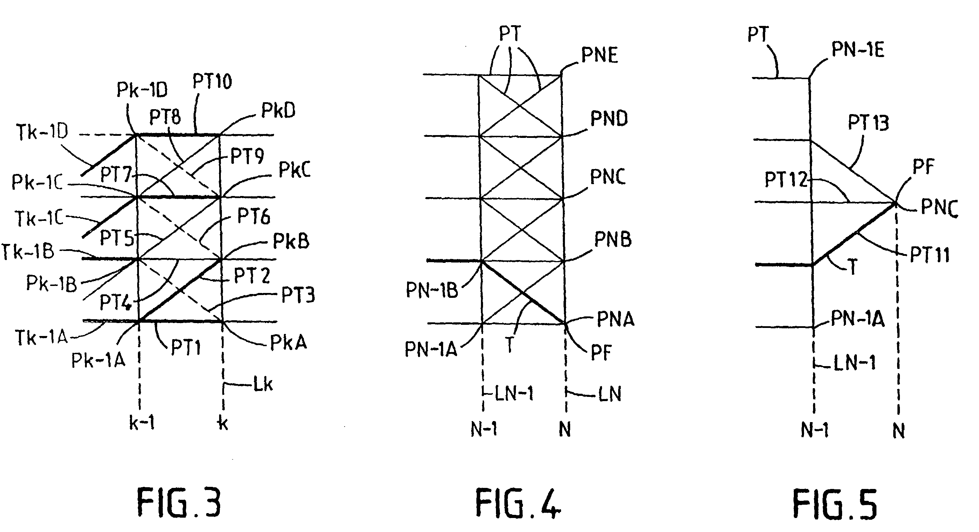

On explicite à présent ces traitements pour une étape k quelconque illustrée sur la figure 3.

Les moyens 4 qui reçoivent le maillage M des moyens 3 par l'intermédiaire d'une liaison 9 sélectionnent, parmi toutes les portions de trajet PT1 à PT10 associées à l'étape k et définies dans ledit maillage M, les portions de trajet admissibles PT1, PT2, PT4, PT5, PT7, PT8 et PT10 susceptibles d'être suivies par ledit aéronef 2, en fonction de caractéristiques spécifiques de ce dernier. Les caractéristiques spécifiques prises en compte dans ce cas sont déterminées à partir de l'enveloppe de vol dudit aéronef 2 et dépendent donc de l'état supposé de l'aéronef 2 à l'étape k-1.

On peut également éliminer dans ce cas certains types de portions de trajet, par exemple celles présentant une pente décroissante, comme envisagé pour les portions de trajet PT3, PT6 et PT9 représentées en traits interrompus.

Les portions de trajet PT1, PT2, PT4, PT5, PT7, PT8 et PT10 ainsi sélectionnées par les moyens 4 sont transmis par une liaison 10 aux moyens 5.

Ces derniers évaluent alors le coût de chacune desdites portions de trajet sélectionnées PT1, PT2, PT4, PT5, PT7, PT8 et PT10. Dans le cadre de la présente invention, pour une portion de trajet quelconque, ledit coût correspond à la valeur d'un critère de coût, engendrée par ledit aéronef 2 lorsqu'il parcourt ladite portion de trajet.

De préférence, ledit critère de coût prend en compte la consommation de carburant estimée et/ou la durée estimée pour parcourir la portion de trajet correspondante.

Pour déterminer le coût de chacune desdites portions de trajet sélectionnées, lesdits moyens 5 mettent en oeuvre un processus de prédiction usuel connu, en utilisant à cet effet des caractéristiques spécifiques de l'aéronef 2 à l'étape k-1, ainsi que des informations météorologiques, reçues d'un dispositif non représenté par l'intermédiaire d'une liaison 11.

Les coûts ainsi évalués sont transmis aux moyens 6 par l'intermédiaire d'une liaison 12.

Ces derniers déterminent alors :
- d'une part, à partir des trajets Tk-1A, Tk-1B, Tk-1C et Tk-1D représentés partiellement et retenus dans les traitements relatifs à l'étape k-1, pour rejoindre à partir de la position PO respectivement les différentes positions Pk-1A, Pk-1B, Pk-1C et Pk-1D de l'étape k-1, les trajets retenus étant reçus par une liaison double 13 des moyens 7 ; et
- d'autre part, à partir des portions de trajet PT1, PT2, PT4, PT5, PT7, PT8 et PT10 sélectionnées par les moyens 5 pour l'étape k et reçues par la liaison 12,
les différents trajets possibles pour rejoindre à partir de la position PO les différentes positions PkA, PkB, PkC et PkD de l'étape k.

Puis lesdits moyens 6 calculent le coût des différents trajets ainsi déterminés, à partir :
- d'une part, du coût desdits trajets Tk-1A, Tk-1B, Tk-1C et Tk-1D retenus dans les traitements relatifs à l'étape k-1, enregistré dans les moyens 7 et reçu par l'intermédiaire de la liaison double 13 ; et
- d'autre part, du coût évalué par les moyens 6 *des* portions de trajet PT1, PT2, PT4, PT5, PT7, PT8 et PT10.

Les coûts ainsi calculés par les moyens 6 sont ensuite transmis aux moyens 7 par la liaison 13.

Ces derniers comparent alors, successivement pour chacune des positions PkA, PkB, PkC et PkD de l'étape k, les coûts calculés par les moyens 6 des différents trajets arrivant à ladite position et ils retiennent et enregistrent, pour chacune desdites positions de l'étape k, le trajet présentant le coût le plus faible, ainsi que le coût correspondant.

A titre d'exemple, on notera que pour arriver à la position PkB, deux trajets sont possibles, à savoir un premier trajet formé de Tk-1B et PT4 et un second trajet formé de Tk-1A et PT2.

Dans le cas où ledit second trajet présente le coût le plus faible, les moyens 7 retiennent uniquement ce dernier.

Sur la figure 3, on a représenté en trait continu renforcé les différents trajets retenus pour chacune des positions PkA, PkB, PkC et PkD de l'étape k.

Les traitements précisés ci-dessus et réalisés par les moyens 4 à 7 sont effectués successivement pour chacune desdites étapes 1 à N, comme illustré par une liaison 14 sur la figure 1.

Toutefois, en ce qui concerne l'étape N, deux modes de réalisation différents sont possibles, illustrés respectivement sur les figures 4 et 5.

Dans un cas général, la position PF n'est pas fixée, mais correspond à l'une des positions PNA, PNB, PNC, PND et PNE possibles sur la ligne verticale LN de l'étape N. Dans ce cas, les moyens 7 déterminent le trajet présentant le coût le plus faible, ce trajet définissant alors la position terminale PF qui correspond à la position PNA dans l'exemple représenté sur la figure 4.

Dans le cas particulier où la position PF est fixée avant la mise en oeuvre des traitements et correspond à la position PNC sur la figure 5, les moyens 7 déterminent à l'étape N uniquement le trajet le moins coûteux arrivant à ladite position PNC, c'est-à-dire qu'ils ne tiennent compte que des portions de trajet PT11, PT12 et PT13.

Au moyen de ces traitements, on est donc en mesure de déterminer un trajet optimal T représenté en trait continu renforcé sur la figure 2.

A partir du trajet T ainsi déterminé, les moyens 7 définissent les positions optimales des points de changement de niveau pour le vol de l'aéronef 2 de la position PO à la position PF et ils les transmettent par l'intermédiaire d'une liaison 15 à un dispositif utilisateur non représenté. Ces positions optimales correspondent aux positions du trajet T, à partir desquelles sont réalisés des changements de niveau, à savoir les positions P1B, P2C, PN-6D, PN-4C et PN-1B de la figure 2.

Ainsi, grâce à l'invention, on réalise une optimisation globale du trajet de vol T et des positions des points de changement de niveau de vol, tout en tenant compte des caractéristiques spécifiques de l'aéronef 2, ainsi que des conditions météorologiques, ce qui permet de réduire considérablement le coût du vol entre la position initiale PO et la position terminale PF.

## Revendications

1. Procédé pour déterminer un trajet de vol optimal (T) d'un aéronef (2) entre une première position (PO) et une seconde position (PF), durant la phase de croisière dudit aéronef (2), ledit trajet de vol (T) étant constitué de portions de trajet (PT) rectilignes adjacentes,
**caractérisé en ce que** :
I/ on forme un maillage (M) de l'espace entre lesdites première et seconde positions (PO, PF), ledit maillage (M) :
- correspondant à la division, selon un plan vertical (OXY), de l'espace entre lesdites première et seconde positions (PO, PF), en N étapes successives, à savoir des étapes 1, 2, ..., k, ..., N, N étant un nombre entier déterminé et k étant un nombre entier quelconque compris entre 1 et N, la première position (PO) représentant une étape O et la seconde position étant située à l'étape N, chacune desdites N étapes k étant définie par une ligne verticale (L1 à LN) dudit plan vertical (OXY) ;
- définissant pour chacune desdites N étapes, différentes positions (PkA, PkB, PkC, PkD) situées à différentes altitudes (A, B, C, D) le long de la ligne verticale (Lk)' correspondante ; et
- associant à chacune desdites N étapes k, des portions de trajet (PT1 à PT10) autorisées pour le vol par l'aéronef (2), entre les positions (Pk-1A, Pk-1B, Pk-1C, Pk-1D) définies pour l'étape k-1 et les positions (PkA, PkB, PkC, PkD) définies pour ladite étape k ; et
II/ on répète pour chacune des étapes 1 à N, la suite de phases d'opérations suivante, relative à une étape k :
a) on sélectionne, parmi toutes les portions de trajet (PT1 à PT10) associées à l'étape k et définies dans ledit maillage (M), les portions de trajet (PT1, PT2, PT4, PT5, PT7, PT8, PT10) susceptibles d'être suivies par ledit aéronef (2), en fonction de caractéristiques spécifiques de ce dernier ;
b) on évalue le coût de chacune desdites portions de trajet sélectionnées, ledit coût correspondant à la valeur d'un critère de coût, engendrée par ledit aéronef (2) lorsqu'il parcourt la portion de trajet correspondante ;
c) d'une part, à partir des trajets (Tk-1A, Tk-1B, Tk-1C, Tk-1D) retenus dans la suite de phases d'opérations, relative à l'étape k-1, pour rejoindre à partir de la première position (PO) respectivement les différentes positions de l'étape k-1 et, d'autre part, à partir des portions de trajet, sélectionnées dans la présente phase d'opérations a), on détermine les différents trajets possibles pour rejoindre à partir de la première position (PO) les différentes positions (PkA, PkB, PkC, PkD) de l'étape k ;
d) on calcule le coût de chacun desdits trajets possibles déterminés dans la phase d'opérations c), à partir du coût des trajets retenus dans la suite de phases d'opérations, relative à l'étape k-1, et du coût évalué dans la phase d'opération b) des portions de trajet correspondantes ; et
e) pour chacune des positions de l'étape k, on compare entre eux les coûts calculés dans la phase d'opérations d), des différents trajets arrivant à ladite position et on retient le trajet présentant le coût le plus faible, le trajet (T) retenu pour l'étape N et arrivant à ladite seconde position (PF) correspondant audit trajet de vol optimal recherché,
et **en ce que** ladite première position correspond à la position initiale (PO) et ladite seconde position correspond à la position terminale (PF) du trajet de vol.

2. Procédé selon la revendication 1, pour déterminer un trajet de vol optimal entre une première position (PO) déterminée et une seconde position (PF) située sur la ligne verticale (LN) de l'étape N,
**caractérisé en ce qu'**à la phase d'opérations e), on compare entre eux les coûts des trajets retenus pour les différentes positions de l'étape N et on retient comme trajet optimal le trajet présentant le coût le plus faible, le trajet ainsi retenu définissant la seconde position (PF) le long de la ligne verticale correspondante.

3. Procédé selon l'une quelconque des revendications 1 et 2, pour déterminer les positions optimales des points de changement de niveau de vol entre lesdites première et seconde positions (PO, PF),
**caractérisé en ce que** lesdites positions optimales correspondent aux positions (P1B, P2C, PN-6D, PN-4C, PN-1B) dudit trajet de vol (T), définies aux étapes 1 à N-1, et pour lesquelles la portion de trajet (PT) qui suit présente une pente non nulle.

4. Procédé selon l'une quelconque des revendications 1 à 3, pour un aéronef (2) pourvu d'un plan de vol préétabli,
**caractérisé en ce que**, pour chacune desdites étapes, les altitudes des positions (PkA, PkB, PkC, PkD) le long de la ligne verticale (Lk) correspondante sont extraites dudit plan de vol.

5. Procédé selon l'une quelconque des revendications 1 à 4,
**caractérisé en ce que**, pour former ledit maillage (M), on tient compte de contraintes opérationnelles interdisant ou imposant certaines portions de trajet (PT) pour le vol de l'aéronef (2).

6. Procédé selon l'une quelconque des revendications 1 à 5,
**caractérisé en ce que** les caractéristiques spécifiques de l'aéronef (2) prises en compte à la phase d'opérations a), sont déterminées à partir de l'enveloppe de vol dudit aéronef (2).

7. Procédé selon l'une quelconque des revendications 1 à 5,
**caractérisé en ce qu'**à la phase d'opérations b), on évalue les coûts en mettant en oeuvre un processus de prédiction.

8. Procédé selon la revendication 7,
**caractérisé en ce que**, pour la mise en oeuvre dudit processus de prédiction, on utilise des caractéristiques spécifiques de l'aéronef, ainsi que des informations météorologiques.

9. Procédé selon l'une quelconque des revendications précédentes,
**caractérisé en ce que** ledit critère de coût prend en compte la consommation de carburant estimée de l'aéronef (2) pour parcourir la portion de trajet (PT) correspondante.

10. Procédé selon l'une quelconque des revendications précédentes,
**caractérisé en ce que** ledit critère de coût prend en compte la durée estimée pour que l'aéronef (2) parcourt la portion de trajet (PT) correspondante.

11. Dispositif pour la mise en oeuvre du procédé spécifié sous l'une quelconque des revendications 1 à 10,
**caractérisé en ce qu'**il comporte :
- des moyens (3) pour former un maillage de l'espace ;
- des moyens (4) pour sélectionner des portions de trajet en fonction de caractéristiques spécifiques de l'aéronef (2) ;
- des moyens (5) pour évaluer le coût des portions de trajet sélectionnées ;
- des moyens (6) pour déterminer des trajets possibles et pour calculer leurs coûts ; et
- des moyens (7) pour comparer lesdits coûts, pour retenir les trajets présentant le coût le plus faible et pour déterminer ledit trajet optimal (T) recherché.

12. Dispositif selon la revendication 11,
**caractérisé en ce qu'**il comporte des moyens (7) pour déterminer les positions optimales (P1B, P2C, PN-6D, PN-4C, PN-1B) des points de changement de niveau de vol entre lesdites première et seconde positions (PO, PF).

## Patentansprüche

1. Verfahren zur Ermittlung eines optimalen Flugwegs (T) eines Flugzeugs (2) zwischen einer ersten Position (PO) und einer zweiten Position (PF) während der Reiseflugphase des genannten Flugzeugs (2), wobei der genannte Flugweg (T) aus aneinandergrenzenden geraden Wegabschnitten (PT) besteht, bei dem
I) ein Gitternetz (M) des Raums zwischen der genannten ersten und der genannten zweiten Position (PO, PF) gebildet wird, wobei das genannte Gitternetz (M)
- der Unterteilung des Raums zwischen der genannten ersten und der genannten zweiten Position (PO, PF) in einer vertikalen Ebene (OXY) in N aufeinanderfolgende Schritte, und zwar die Schritte 1, 2 ..., k, ... N entspricht, wobei N eine festgelegte ganze Zahl und k eine beliebige ganze Zahl zwischen 1 und N ist, die erste Position (PO) einen Schritt O darstellt und die zweite Position mit dem Schritt N übereinstimmt, und hierbei ist jeder der genannten N Schritte k durch eine vertikale Linie (L1 bis LN) in der genannten vertikalen Ebene OXY definiert,
- für jeden der genannten N Schritte verschiedene Positionen (PkA, PkB, PkC und PkD) in unterschiedlichen Höhen (A, B, C, und D) auf der entsprechenden vertikalen Linie (Lk)' festlegt,
- jedem der genannten N Schritte k für den Flug mit dem Flugzeug (2) zugelassene Wegabschnitte (PT1 bis PT10) zwischen den für den Schritt k-1 festgelegten Positionen (Pk-1A, Pk-1B, Pk-1C und Pk-1D) und den für den Schritt k festgelegten Positionen (PkA, PkB, PkC und PkD) zuordnet, und
II) die folgende Folge von auf einen Schritt k bezogenen Operationsphasen für jeden der Schritte 1 bis N wiederholt wird:
a) es werden aus sämtlichen dem Schritt k zugeordneten und im genannten Gitternetz (M) definierten Wegabschnitten (PT1 bis PT10) die Wegabschnitte (PT1, PT2, PT4, PT5, PT7, PT8 und PT10) ausgewählt, die in Abhängigkeit von den spezifischen Kenndaten des Flugzeugs vom genannten Flugzeug (2) eingehalten werden können,
b) es werden die Kosten eines jeden der genannten ausgewählten Wegabschnitte geschätzt, wobei die genannten Kosten dem Wert eines Kostenkriteriums entsprechen, das im Zusammenhang mit dem Flugzeug (2) anzuwenden ist, wenn es den entsprechenden Wegabschnitt überfliegt,
c) es werden einerseits auf der Grundlage der in der Folge der Operationsphasen enthaltenen Wege (Tk-1A, Tk-1B, Tk-1C und Tk-1D), die sich auf den Schritt k-1 beziehen, zu den verschiedenen Positionen im Zusammenhang mit dem Schritt k-1 führen und von der ersten Position (PO) an beginnen, und andererseits auf der Grundlage der in der gegenwärtigen Phase der Operationen a) ausgewählten Wegabschnitte die verschiedenen möglichen Wegabschnitte ermittelt, die zu den verschiedenen Positionen (PkA, PkB, PkC und PkD) des Schritts k führen und die von der ersten Position (PO) an beginnen,
d) es werden auf der Grundlage der Kosten der in der Folge von Operationsphasen enthaltenen Wege, die sich auf den Schritt k-1 beziehen, und auf der Grundlage der in der Operationsphase b) der entsprechenden Wegabschnitte geschätzten Kosten die Kosten eines jeden der in der Operationsphase c) ermittelten möglichen Wege berechnet, und
e) es werden für jede der Positionen von Schritt k die Kosten, die in der Operationsphase d) für die verschiedenen zu der genannten Position führenden Wege berechnet wurden, miteinander verglichen und der Weg mit den niedrigsten Kosten gespeichert, wobei der für den Schritt N gespeicherte und zur genannten zweiten Position (PF) führende Weg (T) dem gesuchten optimalen Flugweg entspricht,
und bei dem die genannte erste Position der Startposition (PO) und die genannte zweite Position der Zielposition (PF) des Flugzeugs entspricht.

2. Verfahren nach Anspruch 1 zur Ermittlung des optimalen Flugwegs zwischen einer ersten festgelegten Position (PO) und einer zweiten, auf der vertikalen Linie (LN) von Schritt N befindlichen Position (PF),
bei dem in der Operationsphase e) die Kosten der Wege, die für die verschiedenen Positionen des Schritts N gespeichert wurden, miteinander verglichen werden und der Weg mit den niedrigsten Kosten als der optimale Weg gespeichert wird, wobei der so gespeicherte Weg die zweite Position (PF) auf der entsprechenden vertikalen Linie definiert.

3. Verfahren nach einem beliebigen der Ansprüche 1 und 2 zur Ermittlung der optimalen Positionen der Flugflächenänderungspunkte zwischen der genannten ersten und der genannten zweiten Position (PO, PF),
bei dem die genannten optimalen Positionen den Positionen (P1B, P2C, PN-6D, PN-4C, PN1-B) des genannten Flugwegs (T) entsprechen, die in den Schritten 1 bis N-1 definiert wurden und für die der sich anschließende Wegabschnitt (PT) eine Neigung aufweist, die nicht gleich Null ist.

4. Verfahren nach einem beliebigen der Ansprüche 1 bis 3 für ein Flugzeug (2) mit einem festgelegten Flugplan,
bei dem bei jedem der genannten Schritte die Höhen der Positionen (PkA, PkB, PkC, PkD) auf der entsprechenden vertikalen Linie (Lk) aus dem genannten Flugplan entnommen werden.

5. Verfahren nach einem beliebigen der Ansprüche 1 bis 4, bei dem für die Erstellung des genannten Gittemetzes (M) flugbetriebsbedingte Einschränkungen Berücksichtigung finden, die bestimmte Wegabschnitte (PT) für den Flug des Flugzeugs (2) verbieten oder vorschreiben.

6. Verfahren nach einem beliebigen der Ansprüche 1 bis 5, bei dem die spezifischen Kenndaten des Flugzeugs (2), die in die Operationsphase a) einbezogen werden, vorzugsweise aus dem Flugbereich des genannten Flugzeugs (2) bestimmt werden.

7. Verfahren nach einem beliebigen der Ansprüche 1 bis 5, bei dem die Kosten in der Operationsphase b) durch Abarbeiten einer Vorhersageprozedur geschätzt werden.

8. Verfahren nach Anspruch 7, bei dem zur Abarbeitung der Vorhersageprozedur spezifische Kenndaten des Flugzeugs zusammen mit meteorologischen informationen verwendet werden.

9. Verfahren nach einem beliebigen der vorangehenden Ansprüche, bei dem im genannten Kostenkriterium auch der geschätzte Kraftstoffverbrauch des Flugzeugs (2) beim Überfliegen des entsprechenden Wegabschnitts (PT) berücksichtigt wird.

10. Verfahren nach einem beliebigen der vorangehenden Ansprüche, bei dem im genannten Kostenkriterium die geschätzte Dauer des Überfliegens des entsprechenden Wegabschnitts (PT) mit dem Flugzeug (2) berücksichtigt wird.

11. Geräteeinheit zur Ausführung des in einem beliebigen der Ansprüche 1 bis 10 dargelegten Verfahrens,
bestehend aus folgenden Bestandteilen:
- einer Gerätekomponente (3) zur Erstellung eines Gitternetzes für den Raum,
- einer Gerätekomponente (4) zur Auswahl der Wegabschnitte auf der Grundlage spezifischer Kenndaten des Flugzeugs (2),
- einer Gerätekomponente (5) zur Schätzung der Kosten der ausgewählten Wegabschnitte,
- einer Gerätekomponente (6) zur Ermittlung möglicher Wege und zur Berechnung der Kosten dieser Wege,
- einer Gerätekomponente (7) zum Vergleich der Kosten zwecks Speicherung der Wege mit den niedrigsten Kosten und zur Ermittlung des genannten optimalen Wegs (T).

12. Geräteeinheit nach Anspruch 11,
zu dem eine Gerätekomponente (7) zur Bestimmung der optimalen Positionen (P1B, P2C, PN-6D, PN-4C und PN-1B) der Flugflächenänderungspunkte zwischen der genannten ersten und der genannten zweiten Position (PO, PF) gehört.

## Claims

1. Process for determining an optimal flight path (T) of an aircraft (2) between a first position (PO) and a second position (PF), during the cruising phase of the said aircraft (2), the said flight path (T) consisting of adjacent straight path portions (PT),
**characterized in that**
I/ a grid (M) of the space between the said first and second positions (PO, PF) is formed, the said grid (M) :
- corresponding to the division, in a vertical plane (OXY), of the space between the said first and second positions (PO, PF), into N successive steps, namely steps 1, 2, ..., k, ..., N, N being a specified integer and k being any integer lying between 1 and N, the first position (PO) representing a step O and the second position being situated at step N, each of the said N steps k being defined by a vertical line (L1 to LN) of the said vertical plane (OXY);
- defining for each of the said N steps, various positions (PkA, PkB, PkC, PkD) situated at various altitudes. (A, B, C, D) along the corresponding vertical line (Lk); and
- associating with each of the said N steps k, path portions (PT1 to PT10) permitted for flight by the aircraft (2), between the positions (Pk-1A, Pk-1B, Pk-1C, Pk-1D) defined for step k-1 and the positions (PkA, PkB, PkC, PkD) defined for the said step k; and
II/ the following string of phases of operations, relating to a step k, is repeated for each of steps 1 to N:
a) the path portions (PT1, PT2, PT4, PT5, PT7, PT8, PT10) liable to be followed by the said aircraft (2) are selected, from all the path portions (PT1 to PT10) associated with step k and defined in the said grid (M), on the basis of specific characteristics of the aircraft;
b) the cost of each of the said selected path portions is evaluated, the said cost corresponding to the value of a cost criterion, generated by the said aircraft (2) when it traverses the corresponding path portion;
c) on the one hand, on the basis of the paths (Tk-1A, Tk-1B, Tk-1C, Tk-1D) retained in the string of phases of operations, relating to step k-1, in order to join up with the various positions respectively of step k-1 starting from the first position (PO) and, on the other hand, on the basis of the path portions selected in the present phase of operations a), the various possible paths for joining up with the various positions (PkA, PkB, PkC, PkD) of step k starting from the first position (PO) are determined;
d) the cost of each of the said possible paths determined in the phase of operations c) is computed, on the basis of the cost of the paths retained in the string of phases of operations, relating to step k-1, and of the cost evaluated in the phase of operation b) of the corresponding path portions; and
e) for each of the positions of step k, the costs computed in the phase of operations d) of the various paths arriving at the said position are compared with one another and the path exhibiting the lowest cost is retained, the path (T) retained for step N and arriving at the said second position (PF) corresponding to the said sought-after optimal flight path,
and **in that** the said first position corresponds to the initial position (PO) and the said second position corresponds to the terminal position (PF) of the flight path.

2. Process according to Claim 1, for determining an optimal flight path between a first specified position (PO) and a second position (PF) situated on the vertical line (LN) of step N,
**characterized in that** in the phase of operations e), the costs of the paths retained for the various positions of step N are compared with one another and the path exhibiting the lowest cost is retained as optimal path, the path thus retained defining the second position (PF) along the corresponding vertical line.

3. Process according to either of Claims 1 and 2, for determining the optimal positions of the points of change of flight level between the said first and second positions (PO, PF),
**characterized in that** the said optimal positions correspond to the positions (P1B, P2C, PN-6D, PN-4C, PN-1B) of the said flight path (T), which are defined in steps 1 to N-1, and for which the path portion (PT) which follows exhibits a non-zero slope.

4. Process according to any one of Claims 1 to 3, for an aircraft (2) provided with a preset flight plan,
**characterized in that**, for each of the said steps, the altitudes of the positions (PkA, PkB, PkC, PkD) along the corresponding vertical line (Lk) are extracted from the said flight plan.

5. Process according to any one of Claims 1 to 4,
**characterized in that**, to form the said grid (M), operational constraints are taken into account which prohibit or prescribe certain path portions (PT) for the flight of the aircraft (2).

6. Process according to any one of Claims 1 to 5,
**characterized in that** the specific characteristics of the aircraft (2) which are taken into account in the phase of operations a), are determined from the flight envelope of the said aircraft (2).

7. Process according to any one of Claims 1 to 5,
**characterized in that** in the phase of operations b),

8. Process according to Claim 7,
**characterized in that**, for the implementation of the said prediction procedure, specific characteristics of the aircraft are used, together with meteorological information.

9. Process according to any one of the preceding claims,
**characterized in that** the said cost criterion takes into account the estimated fuel consumption of the aircraft (2) when traversing the corresponding path portion (PT).

10. Process according to any one of the preceding claims,
**characterized in that** the said cost criterion takes into account the estimated duration for the aircraft (2) to traverse the corresponding path portion (PT).

11. Device for implementing the process specified under any one of Claims 1 to 10,
**characterized in that** it comprises:
- means (3) for forming a grid of the space;
- means (4) for selecting path portions on the basis of specific characteristics of the aircraft (2);
- means (5) for evaluating the cost of the selected path portions;
- means (6) for determining possible paths and for computing their costs;
- means (7) for comparing the said costs, for retaining the paths exhibiting the lowest cost and for determining the said sought-after optimal path (T).

12. Device according to Claim 11,
**characterized in that** it comprises means (7) for deterirtining the optimal positions (P1B, P2C, PN-6D, PN-4C, PN-1B) of the points of change of flight level between the said first and second positions (PO, PF).
